# FASCICULE DE BREVET EUROPEEN

(11) **EP 3 853 463 B1**
(45) Date de publication et mention de la délivrance du brevet: **13.07.2022**
(21) Numéro de dépôt: 19794176.8
(22) Date de dépôt: 13.09.2019
(51) Int. Cl.: F02K 1/72, F02K 1/76

(54) **NACELLE DE TURBORÉACTEUR AVEC UN INVERSEUR DE POUSSÉE A GRILLES COMPRENANT UN SECTEUR DE COMMANDE DES VOLETS**
TURBOFAN-TRIEBWERK-GONDEL MIT EINEM GITTERARTIGEN SCHUBUMKEHRER MIT EINEM KLAPPENSTEUERUNGSSEKTOR
TURBOFAN ENGINE NACELLE WITH A GRID-TYPE THRUST REVERSER COMPRISING A FLAP CONTROL SECTOR

(30) Priorité: 18.09.2018 FR 1858429
(43) Date de publication de la demande: 28.07.2021
(73) Titulaire: Safran Nacelles, 76700 Gonfreville-l'Orcher (FR)
(72) Inventeur: BELLET, François, 77550 MOISSY CRAMAYEL (FR); CORFA, Jérôme, 77550 MOISSY CRAMAYEL (FR); VAN DEN DRIESSCHE, Julien, 77550 MOISSY CRAMAYEL (FR)
(74) Mandataire: Germain Maureau
(86) Numéro de dépôt international: PCT/FR2019/052124
(87) Numéro de publication internationale: WO 2020/058607

(56) Documents cités:
- EP-A1- 2 868 908
- FR-A1- 2 952 128
- US-A1- 2010 139 242

## Description

La présente invention concerne une nacelle de turboréacteur à double flux comportant un inverseur de poussée à grilles délivrant un flux d'air froid vers l'avant.

Les turboréacteurs de motorisation des aéronefs, disposés suivant un axe longitudinal et entourés par une nacelle, reçoivent de l'air frais venant du côté avant, et rejettent du côté arrière les gaz chauds issus de la combustion du carburant délivrant une poussée.

Les turboréacteurs à double flux comportent des aubes de soufflante disposées en couronne autour du moteur, générant un flux secondaire important d'air froid le long d'une veine annulaire passant entre ce moteur et la nacelle, qui ajoute une poussée élevée.

Certaines nacelles comportent un système d'inversion de poussée équipé de volets pivotants fermant au moins en partie la veine annulaire d'air froid, pour diriger le flux secondaire radialement vers l'extérieur au travers d'ouvertures latérales de la nacelle qui s'ouvrent, en le dirigeant vers l'avant afin de générer une poussée inversée de freinage de l'aéronef.

Les documents US 2010/139242 A1 et EP 2 868 908 A1 montrent des inverseurs de poussée selon l'art antérieur.

Un type d'inverseur de poussée à grilles connu, présenté notamment par le document US-A1-20160160799, comporte des capots mobiles arrière coulissant axialement vers l'arrière sous l'effet de vérins, pour ouvrir la structure mobile de la nacelle contenant des grilles. Les volets pivotants sont reliés par des biellettes à un cadre avant fixe, pour manœuvrer ces volets lors du recul des capots mobiles. Cette solution n'est pas applicable en l'absence de cadre avant.

Un autre type d'inverseur de poussée à grilles connu, présenté notamment par le document FR-A1-2758761, comporte des biellettes reliant les volets pivotants à la structure intérieure fixe de la veine annulaire, appelée « inner fixed structure » en langue anglaise, ou « IFS » en abrégé, qui font basculer les volets pivotants entraînés vers l'arrière par le recul des capots mobiles.

Les biellettes de commande des volets pivotants traversant la veine annulaire d'air froid, posent des problèmes de rendement lorsque l'inverseur est en position jet direct, à cause des pertes aérodynamiques qu'elles génèrent dans cette veine annulaire.

La présente invention a notamment pour but d'éviter ces inconvénients de la technique antérieure.

Elle propose à cet effet une nacelle de moteur du type turboréacteur à double flux disposé suivant un axe principal, comprenant en partant d'un côté avant une veine annulaire de réception d'air frais venant d'une soufflante, et un système d'inversion de poussée disposant d'au moins un capot mobile axialement entre une position avant de jet direct, et une position arrière de jet inversé qui bascule des volets pivotants en fermant au moins partiellement la veine annulaire, et qui ouvre des ouvertures latérales de cette veine annulaire en amont des volets pivotants, équipées de grilles d'inversion renvoyant le flux d'air froid vers l'extérieur en direction de l'avant, cette nacelle étant remarquable en ce que chaque capot mobile comporte un secteur de commande coulissant dans un plan transversal par rapport à l'axe principal, comporte un dispositif de renvoi reliant une partie fixe de la nacelle à ce secteur de commande pour le faire coulisser vers une position d'inversion lors du recul du capot mobile, et comporte des biellettes de volet reliant ce secteur de commande aux volets pivotants disposés en face du capot mobile, qui basculent ces volets en fermant la veine annulaire lors du coulissement du secteur de commande vers sa position d'inversion.

Un avantage de cette nacelle est que la commande de l'ensemble des volets pivotants répartis en face de chaque capot se fait par l'intermédiaire d'un seul secteur de commande fixé sur ce capot, coulissant dans la direction tangentielle, qui est commandé à ses extrémités par un dispositif de renvoi rattaché à une partie fixe de la nacelle. Les biellettes de volet restent à l'extérieur de la veine annulaire, on évite de disposer pour chaque volet une biellette qui traverserait le flux d'air frais. De cette manière on n'a pas besoin de cadre avant fixe sur la section médiane de la nacelle en avant des capots, et on optimise le rendement aérodynamique de la nacelle.

La nacelle selon l'invention peut comporter de plus une ou plusieurs des caractéristiques suivantes, qui peuvent être combinées entre elles.

Avantageusement, chaque biellette de volet comporte un système de rattrapage de jeu comprenant deux parties axiales coulissantes l'une par rapport à l'autre, équipées d'un ressort intermédiaire. Cette disposition permet d'annuler des jeux des volets en position jet direct.

Avantageusement, chaque volet comporte un crochet de sécurité fixé au secteur de commande, qui sécurise la position en appliquant sur le volet en position jet direct un effort parallèle au déplacement de ce volet. Ce crochet est engagé et dégagé automatiquement lors des coulissements des secteurs de commande.

Avantageusement, chaque secteur de commande comporte des guidages fixés au capot le supportant, permettant un mouvement de ce secteur de commande suivant une direction circonférentielle.

En particulier, chaque secteur de commande peut comporter un dispositif de renvoi à chacune de ses extrémités. On obtient un double actionnement des secteurs de commande qui assure la sécurité.

Selon un mode de réalisation, la nacelle comporte un dispositif de renvoi comprenant une plaque de renvoi fixée au capot par un pivot de capot, qui est reliée à la partie fixe de la nacelle par une biellette primaire et au secteur de commande par une biellette secondaire.

Selon un autre mode de réalisation, la nacelle comporte un dispositif de renvoi comprenant une crémaillère liée à la partie fixe et disposée parallèlement à l'axe principal, et un pignon engagé sur cette crémaillère, lié à un capot.

Dans ce cas, le dispositif de renvoi peut comporter une biellette secondaire reliant le pignon au secteur de commande, ou en variante le pignon peut entraîner une came recevant un pion de liaison relié au secteur de commande, ou peut entraîner un pignon d'un renvoi d'angle relié au secteur de commande par un système vis-écrou.

Selon un autre mode de réalisation, la nacelle comporte un dispositif de renvoi comprenant une came recevant un pion de liaison, un de ces éléments coulissant axialement lors du mouvement de recul du capot, l'autre élément étant lié au secteur de commande pour l'entraîner.

Selon un autre mode de réalisation, la nacelle comporte un dispositif de renvoi comprenant un câble fixé au secteur de commande suivant une direction transversale, passant de chaque côté de ce secteur par une poulie liée au capot en prenant une direction axiale vers l'arrière d'un côté et vers l'avant de l'autre côté, pour être fixé ensuite à une partie fixe.

L'invention sera mieux comprise et d'autres caractéristiques et avantages apparaîtront plus clairement à la lecture de la description ci-après donnée à titre d'exemple, en référence aux dessins annexés dans lesquels :
les figures 1a et 1b sont des schémas d'un système d'inversion de poussée pour une nacelle selon l'invention, présenté successivement en position jet direct et jet inversé ;
les figures 2a et 2b sont des schémas vu du côté avant d'un volet pivotant de ce système d'inversion, présenté successivement en position jet direct et en position jet inversé ;
les figures 3a et 3b sont des schémas d'un dispositif de renvoi à biellettes, présenté successivement en position jet direct et en position jet inversé ;
les figures 4a, 4b et 4c sont des schémas d'un dispositif de renvoi suivant une variante à crémaillère, présenté successivement en vue de dessus avec la position jet direct et la position jet inversé, et en coupe axiale suivant le plan de coupe IVc-IVc dans la position jet direct ;
la figure 5 est un schéma en coupe axiale de ce dispositif de renvoi équipé d'une motorisation ;
les figures 6a, 6b et 6c sont des schémas d'un dispositif de renvoi à came tournante, présenté successivement en vue de dessus avec la position jet direct et la position jet inversé, et en coupe axiale suivant le plan de coupe VIc-VIc dans la position jet direct ;
la figure 7 est un schéma en coupe axiale de ce dispositif de renvoi équipé d'une motorisation ;
les figures 8a et 8b sont des schémas d'un dispositif de renvoi à came en translation, présenté successivement en position jet direct et en position jet inversé ;
les figures 9a et 9b sont des schémas d'un dispositif de renvoi à crémaillère et renvoi d'angle dans la position jet direct, présenté successivement sans motorisation et avec une motorisation ;
les figures 10a et 10b sont des schémas d'un dispositif de renvoi à câble, présenté successivement en position jet direct et en position jet inversé ; et
les figures 11a et 11b sont des schémas d'un dispositif de renvoi à came cylindrique, présenté successivement en position jet direct et en position jet inversé ;

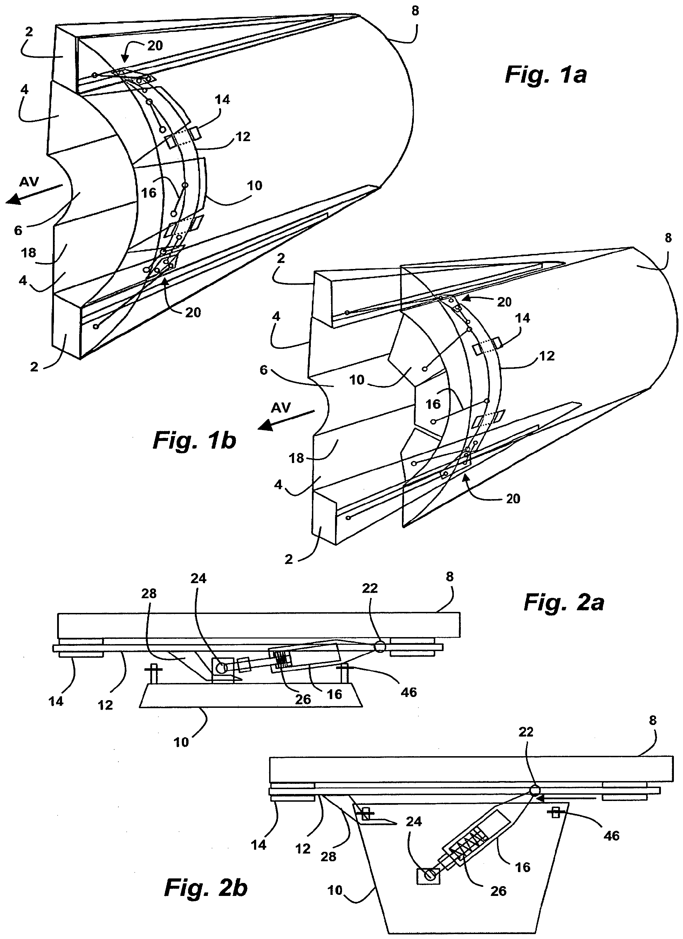

Les figures 1a, 1b, 2a et 2b présentent la section arrière d'une nacelle comprenant un inverseur de poussée, disposée suivant un axe principal, comprenant des poutres fixes supérieure et inférieure 2 liées à l'aéronef, supportant par une liaison disposée dans un plan axial vertical 4 une structure intérieure fixe 6 enveloppant le turboréacteur.

Une veine annulaire 18 disposée autour de la structure intérieure fixe, est encadrée de chaque côté de la nacelle par un capot mobile 8 coulissant vers l'arrière.

Chaque capot mobile 8 supporte sensiblement à son extrémité avant, des volets pivotants 10 présentant chacun un axe de pivotement 46 fixé vers l'avant de ce capot suivant une direction tangentielle, afin de basculer vers l'intérieur en venant sur la structure interne fixe 6 comme présenté figure 1b, pour fermer la veine annulaire 18.

Un secteur de commande 12 formant une barre allongée et courbée, maintenue à l'intérieur de chaque capot 8 dans un plan transversal par des guidages 14 pour coulisser dans une direction tangentielle, couvre une majeure partie angulaire de ce capot, suivant un secteur proche de 180°.

Chaque extrémité du secteur de commande 12 est relié à la poutre fixe inférieure ou supérieure 2 par un dispositif de renvoi 20, qui lors du recul du capot 8 suivant la flèche R, entraîne ce secteur dans un coulissement vers le bas suivant la flèche C en suivant ses guidages 14.

En variante les deux secteurs de commande 12 des deux capots 8 peuvent coulisser tous les deux vers le haut, ou dans un même sens de rotation horaire ou anti-horaire, l'un partant vers le bas et l'autre vers le haut.

Chaque volet pivotant 10 en face d'un capot 8, est relié au secteur de commande 12 de ce capot par une biellette 16 comprenant une rotule 22, 24 à chaque extrémité, pour lors du coulissement C de ce secteur entraîner le basculement de ce volet radialement vers l'intérieur.

Dans la position jet direct chaque biellette 16 est proche de la position d'alignement tangentiel, la rotule 24 liée au volet 10 étant légèrement décalée radialement vers l'axe de la nacelle par rapport à l'autre rotule 22.

Lors du passage vers la position jet inversé, le coulissement C du secteur de commande 12 agissant sur chaque biellette 16, écarte sa rotule de volet 24 dans la direction radiale vers l'axe de la nacelle, en entraînant son volet 10 qui pivote en se fermant.

Avantageusement, la rotule 24 liée au volet 10 se trouve en position jet inversé, en bas de ce volet dans la direction de l'axe principal de la nacelle, ce qui donne un bras de levier important augmentant la course mais réduisant l'effort sur la biellette 16.

Le jet est alors dirigé vers des grilles d'inversion non représentées, disposées dans les ouvertures latérales de la veine annulaire 18 dégagées en avant des capots 8 qui ont reculés.

Chaque biellette 16 comporte un système de rattrapage de jeu comprenant deux parties axiales coulissantes l'une par rapport à l'autre, équipées d'un ressort intermédiaire 26 travaillant en compression, qui lors de l'ouverture du volet 10 se comprime en fin de coulissement du secteur de commande 12 afin de s'assurer qu'en jet direct ce volet soit bien bloqué en appui sur sa butée de fin de course pour éviter un jeu.

Un crochet de sécurité 28 fixé radialement à l'intérieur du secteur de commande 12, vient dans la position jet direct sous la rotule de volet 24 de la biellette 16 afin de sécuriser la position jet direct du volet 10 en appliquant une prétention sur ce volet, et en évitant sa fermeture inopinée. Le mouvement du secteur de commande 12 vers la position jet inversé libère automatiquement ce crochet de sécurité 28 pour permettre la bascule du volet 10.

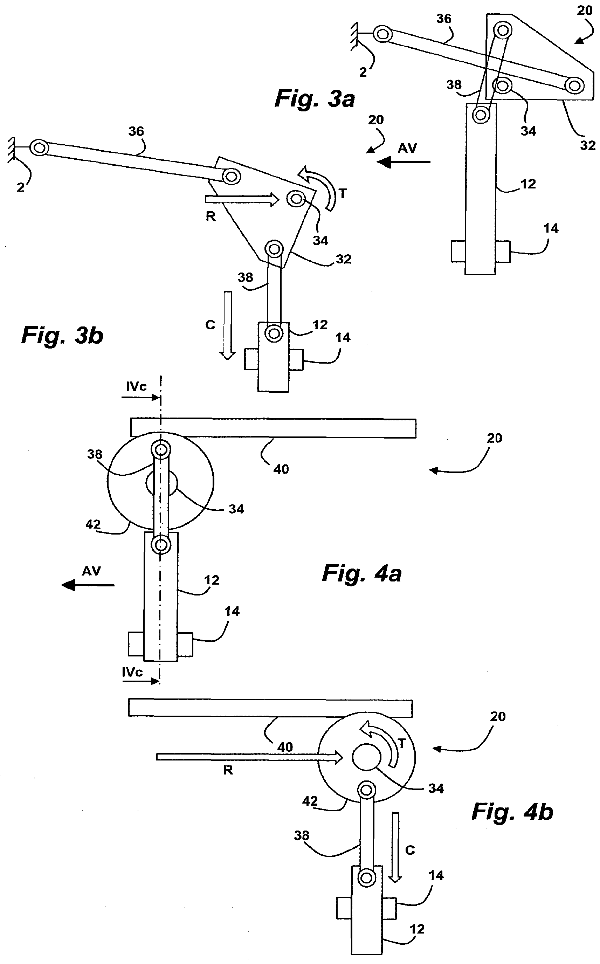

La figure 3a présente un dispositif de renvoi 20 comprenant une plaque de renvoi 32 disposée dans un plan tangentiel autour de l'axe principal, fixée au capot 8 par un pivot de capot 34, reliée à la poutre fixe 2 par une biellette primaire 36 et au secteur de commande 12 par une biellette secondaire 38. Chaque biellette 36, 38 comporte une articulation à chaque extrémité pour permettre leurs débattements dans le plan tangentiel de la plaque de renvoi 32.

La biellette primaire 36 est fixée à la plaque de renvoi 32 en un point situé axialement en arrière du pivot de capot 34. La biellette secondaire 38 est fixée à la plaque de renvoi 32 dans la direction tangentielle, en un point situé à l'opposé du secteur de commande 12 par rapport au pivot de capot 34.

La figure 3b présente le recul R du capot 8 et du pivot de capot 34. La biellette primaire 36 fait tourner suivant un angle indiqué par la flèche T la plaque de renvoi 32 autour du pivot de capot 34, avec un angle un peu inférieur à 180°, ce qui entraîne la biellette secondaire 38 dans un mouvement sensiblement tangentiel faisant coulisser le secteur de commande 12 suivant le coulissement C. On obtient une fermeture simultanée de tous les volets 10 reliés à ce secteur de commande 12.

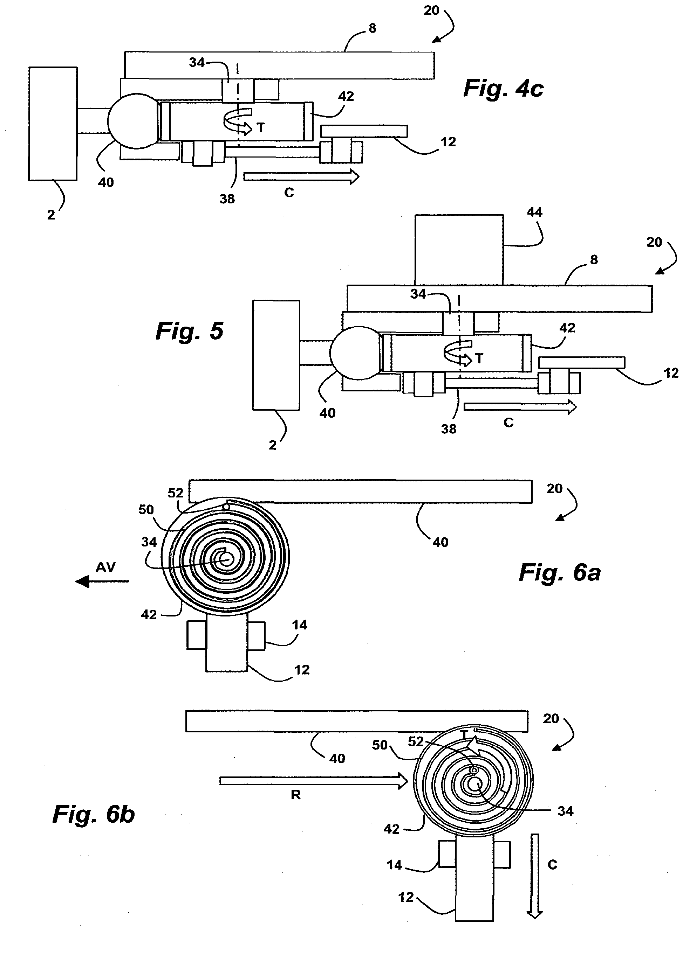

Les figures 4a et 4c présentent un dispositif de renvoi 20 comprenant une crémaillère 40 reliée à la poutre fixe 2, un pignon 42 porté par un pivot de capot 34 étant engagé sur cette crémaillère.

Une biellette secondaire 38 disposée sensiblement tangentiellement, est reliée d'un côté au secteur de commande 12, et de l'autre côté au pignon 42 en un point opposé à ce secteur de commande par rapport au pivot de capot 34.

La figure 4b présente le recul R du capot 8 et du pivot de capot 34. Le pignon 42 tourne sur la crémaillère 40 suivant un angle indiqué par la flèche T, la biellette secondaire 38 réalise un mouvement sensiblement tangentiel faisant coulisser le secteur de commande 12 suivant le coulissement C. On obtient une fermeture des volets 10.

La figure 5 présente une motorisation 44 fixée sur le capot 8 entraînant directement le pignon 42 en rotation, ce qui permet par son actionnement en prenant appui sur la crémaillère 40, à la fois de faire reculer ce capot et de faire basculer les volets 10. La motorisation 44 réalise l'entraînement complet de l'inverseur de poussée, ce qui évite l'utilisation de vérins pour manœuvrer le capot 8 et ses volets pivotants 10.

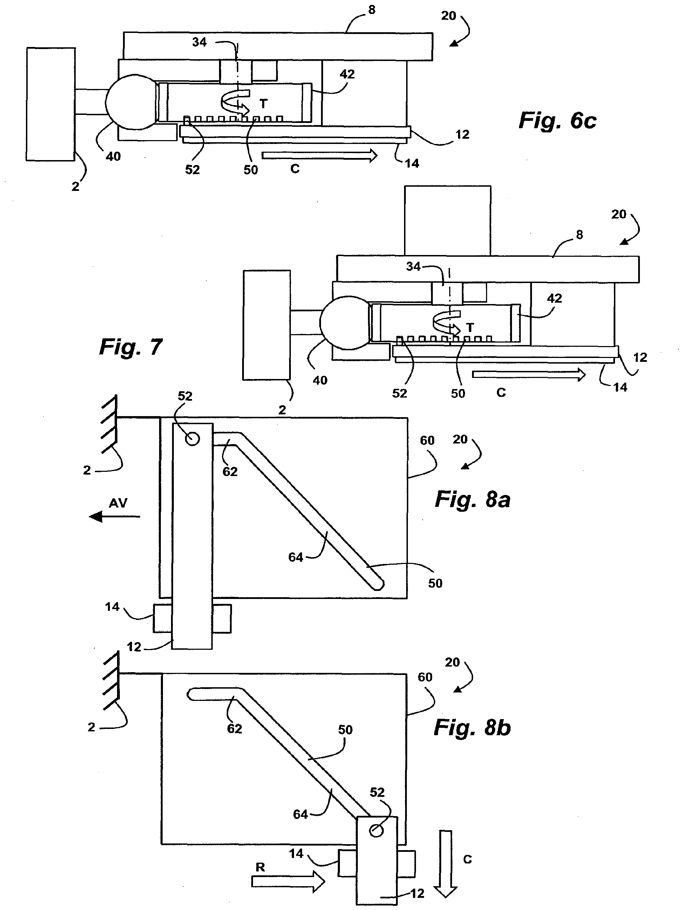

Les figures 6a et 6c présentent un dispositif de renvoi 20 comprenant une crémaillère 40 reliée à la poutre fixe 2, et un pignon 42 porté par un pivot de capot 34, qui est engagé sur la crémaillère 40.

Le pignon 42 comporte sur sa face inférieure opposée au capot 8 une rainure en spirale formant une came 50, recevant un pion de liaison 52 fixé à l'extrémité du secteur de commande 12.

La figure 6b présente le recul R du capot 8 et du pivot de capot 34, qui fait tourner la came 50 suivant l'angle T, en entraînant le pion de liaison 52 qui reste sur une direction radiale donnée de cette came par le coulissement du secteur de commande 12. Le pion de liaison 52 se rapproche de l'axe de la came 50 en suivant la spirale de sa rainure, donnant le coulissement C du secteur de commande 12.

La came 50 permet en modifiant son angle au départ et à l'arrivée par rapport à la direction tangente du pignon 42, d'obtenir des vitesses d'entraînement variables au début et à la fin de la fermeture des volets 10. On peut en particulier réaliser des démarrages et des arrêts en douceur, ainsi qu'un blocage des volets 10 en donnant à la came une direction tangente.

La figure 7 présente une motorisation 44 fixée sur le capot 8 entraînant directement le pignon 42 portant la came 50 en rotation, ce qui permet par son actionnement en prenant appui sur la crémaillère 40, à la fois de faire reculer ce capot et de faire basculer les volets 10.

La figure 8a présente un dispositif de renvoi 20 comprenant un plateau 60 disposé dans un plan tangentiel par rapport à l'axe principal, présentant une rainure comprenant une partie axiale 62 puis une partie inclinée 64, formant une came 50 recevant un pion de liaison 52 fixé à l'extrémité du secteur de commande 12.

La figure 8b présente le recul R du capot 8 et du secteur de commande 12, le plateau 60 avec sa came 50 restant fixe, ce qui entraîne le déplacement du pion de liaison 52 dans la direction transversale, et le coulissement C de ce secteur de commande.

Comme pour le dispositif de renvoi 20 présenté figure 6a on peut prévoir des pentes différentes de la came 50 au départ et à l'arrivée pour obtenir des vitesses d'entraînement variables au début et à la fin, ainsi qu'un blocage des volets 10.

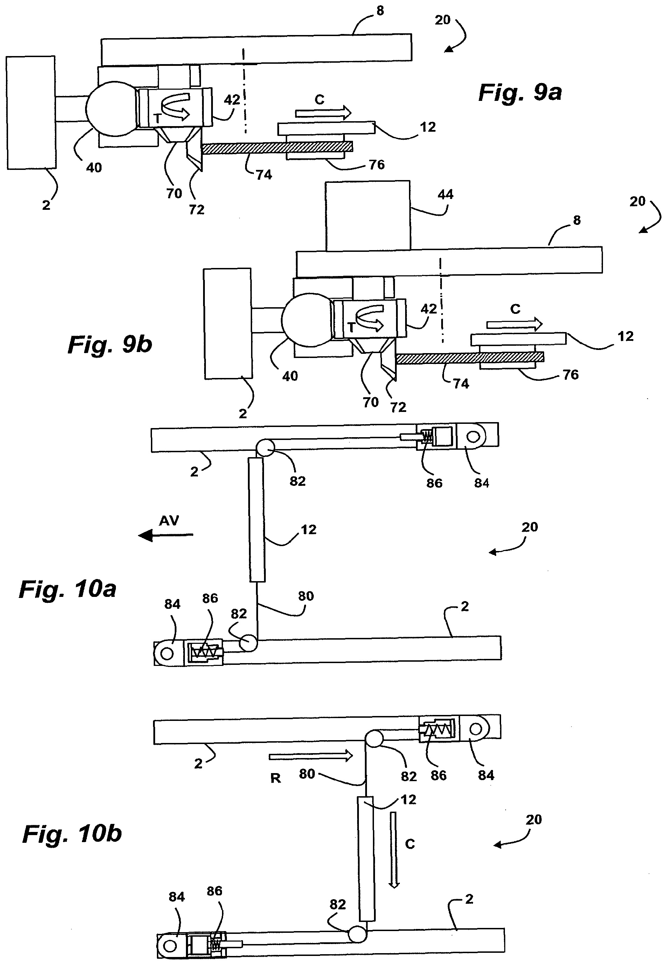

La figure 9a présente un dispositif de renvoi 20 comprenant une crémaillère 40 reliée à la poutre fixe 2, et un pignon 42 porté par un pivot de capot, qui est engagé sur la crémaillère 40.

Le pignon 42 comporte sur sa face inférieure opposée au capot 8, un premier pignon conique 70 qui engrène avec un deuxième pignon conique 72 fixé à l'extrémité d'une vis 74 disposée dans le prolongement du secteur de commande 12, qui est engagée dans un écrou 76 fixé sur le côté de ce secteur de commande.

Le recul du capot 8 et du pivot de capot fait tourner le pignon 42 et le premier pignon conique 70 suivant un angle T, ce qui entraîne en rotation le deuxième pignon conique 72 formant un renvoi d'angle, et la vis 74. L'écrou 76 se déplace axialement sur la vis 74, en entraînant le coulissement C du secteur de commande 12.

La figure 9b présente une motorisation 44 fixée sur le capot 8 entraînant directement le pignon 42 portant le premier pignon conique 70 en rotation, ce qui permet par son actionnement en prenant appui sur la crémaillère 40, à la fois de faire reculer ce capot et de faire basculer les volets 10.

La figure 10a présente un dispositif de renvoi 20 comprenant un câble 80 fixé le long du secteur de commande 12, passant au-delà de chaque extrémité de ce secteur par une poulie 82 liée au capot 8.

Après chaque poulie 82 le câble suit une direction axiale vers l'arrière d'un côté et vers l'avant de l'autre côté, pour être fixé à son extrémité par une attache 84 à une poutre fixe 2. Chaque attache 84 est liée au câble 80 par un ressort 86 travaillant en compression, de manière à rattraper des jeux et à assurer une tension constante de ce câble.

La figure 10b présente un recul R du capot 8 et du secteur de commande 12, entraînant le déroulement du câble 80 sur les poulies 82, qui passe progressivement de la poutre supérieure 2 à la poutre inférieure de l'autre côté, en entraînant transversalement le mouvement de coulissement C du secteur de commande fixé à ce câble.

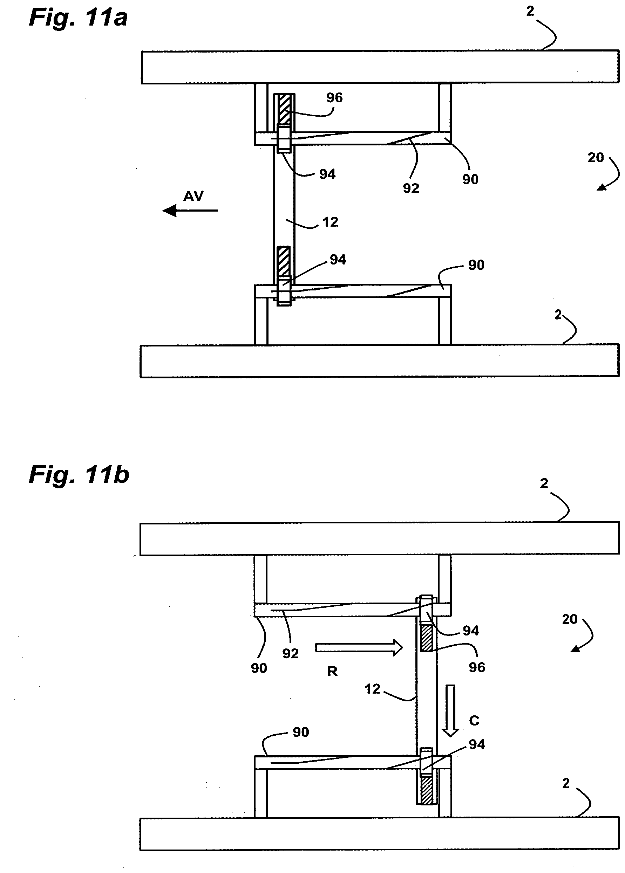

La figure 11a présente un dispositif de renvoi 20 comprenant une came cylindrique 90 fixée parallèlement à chaque poutre 2, comportant une rainure hélicoïdale 92, passant chacune dans un perçage central d'un pignon 94 disposant d'un pion de liaison engagé dans cette rainure. Le secteur de commande 12 supportant les deux pignons 94, comporte une crémaillère 90 engagée sur ces pignons.

La figure 11b présente un recul R du capot 8 et du secteur de commande 12, entraînant la rotation de chaque pignon 94 venant de son pion engagé dans une rainure hélicoïdale 92, ce qui donne le coulissement C transversal de la crémaillère 96 et du secteur de commande.

La nacelle suivant l'invention permet pour chaque capot mobile 8 de disposer d'une unique pièce formant le secteur de commande 12, coulissant transversalement en utilisant différents dispositif de renvois qui ne se limitent pas à ceux décrits ci-dessus à titre d'exemple, pour commander tous les volets 10 se trouvant sous ce capot sans traverser la veine annulaire. Avantageusement on dispose un secteur de commande 12 sur chaque capot 8 d'un inverseur à deux capots disposés symétriquement de chaque côté d'un plan axial de la nacelle.

## Revendications

1. Nacelle de moteur du type turboréacteur à double flux disposé suivant un axe principal, comprenant en partant d'un côté avant une veine annulaire (18) de réception d'air frais venant d'une soufflante, puis un système d'inversion de poussée disposant d'au moins un capot (8) mobile axialement entre une position avant de jet direct, et une position arrière de jet inversé qui bascule des volets pivotants (10) en fermant au moins partiellement la veine annulaire (18), et qui ouvre des ouvertures latérales de cette veine annulaire en amont des volets pivotants (10), équipées de grilles d'inversion renvoyant le flux d'air froid vers l'extérieur en direction de l'avant, **caractérisée en ce que** chaque capot mobile (8) comporte un secteur de commande (12) coulissant dans un plan transversal par rapport à l'axe principal, comporte un dispositif de renvoi (20) reliant une partie fixe de la nacelle (2) à ce secteur de commande (12) pour le faire coulisser vers une position d'inversion lors du recul du capot mobile (8), et comporte des biellettes de volet (16) reliant ce secteur de commande (12) aux volets pivotants (10) disposés en face du capot mobile (8), qui basculent ces volets (10) en fermant la veine annulaire (18) lors du coulissement du secteur de commande (12) vers sa position d'inversion.

2. Nacelle selon la revendication 1, **caractérisée en ce que** chaque biellette de volet (16) comporte un système de rattrapage de jeu comprenant deux parties axiales coulissantes l'une par rapport à l'autre, équipées d'un ressort intermédiaire (26).

3. Nacelle selon l'une quelconque des revendications précédentes, **caractérisée en ce que** chaque volet (10) comporte un crochet de sécurité (28) fixé au secteur de commande (12), qui sécurise la position en appliquant sur le volet (10) en position jet direct un effort parallèle au déplacement de ce volet (10).

4. Nacelle selon l'une quelconque des revendications précédentes, **caractérisée en ce que** chaque secteur de commande (12) comporte des guidages (14) fixés au capot le supportant (8), permettant un mouvement de ce secteur de commande (12) suivant une direction circonférentielle.

5. Nacelle selon l'une quelconque des revendications précédentes, **caractérisée en ce que** chaque secteur de commande (12) comporte un dispositif de renvoi (20) à chacune de ses extrémités.

6. Nacelle selon l'une quelconque des revendications précédentes, **caractérisée en ce qu'**elle comporte un dispositif de renvoi (20) comprenant une plaque de renvoi (32) fixée au capot (8) par un pivot de capot (34), qui est reliée à la partie fixe de la nacelle (2) par une biellette primaire (36) et au secteur de commande (12) par une biellette secondaire (38).

7. Nacelle selon l'une quelconque des revendications 1 à 5, **caractérisée en ce qu'**elle comporte un dispositif de renvoi (20) comprenant une crémaillère (40) liée à la partie fixe (2) et disposée parallèlement à l'axe principal, et un pignon (42) engagé sur cette crémaillère (40), lié à un capot (8).

8. Nacelle selon la revendication 7, **caractérisée en ce que** le dispositif de renvoi (20) comporte une biellette secondaire (38) reliant le pignon (42) au secteur de commande (12), ou en variante **en ce que** le pignon (42) entraîne une came (50) recevant un pion de liaison (52) relié au secteur de commande (12), ou entraîne un pignon d'un renvoi d'angle (70) relié au secteur de commande (12) par un système vis-écrou.

9. Nacelle selon l'une quelconque des revendications 1 à 5, **caractérisée en ce qu'**elle comporte un dispositif de renvoi (20) comprenant une came (50, 90) recevant un pion de liaison (52), un de ces éléments coulissant axialement lors du mouvement de recul du capot (8), l'autre élément étant lié au secteur de commande (12) pour l'entraîner.

10. Nacelle selon l'une quelconque des revendications 1 à 5, **caractérisée en ce qu'**elle comporte un dispositif de renvoi (20) comprenant un câble (80) fixé au secteur de commande (12) suivant une direction transversale, passant de chaque côté de ce secteur (12) par une poulie (82) liée au capot (8) en prenant une direction axiale vers l'arrière d'un côté et vers l'avant de l'autre côté, pour être fixé ensuite à une partie fixe (2).

## Patentansprüche

1. Gondel eines Motors, in der Art eines Turbofan-Triebwerks, das entlang einer Hauptachse angeordnet ist, das ausgehend von einer Vorderseite einen ringförmigen Triebwerksgang (18) zur Aufnahme von Frischluft, die von einem Gebläse kommt, danach ein Schubumkehrsystem umfasst, das über mindestens eine Abdeckung (8) verfügt, die zwischen einer vorderen Direktstrahlstellung und einer hinteren Umkehrstrahlstellung axial beweglich ist, die schwenkbare Klappen (10) umkippt und dabei den ringförmigen Triebwerksgang (18) mindestens teilweise schließt, und die seitliche Öffnungen dieses ringförmigen Triebwerksgangs stromaufwärts der schwenkbaren Klappen (10) öffnet, die mit Umkehrgittern ausgestattet sind, die den Kaltluftstrom nach außen in Richtung nach vorne abweisen, **dadurch gekennzeichnet, dass** die bewegliche Abdeckung (8) einen Steuerungssektor (12) beinhaltet, der in einer Querebene in Bezug zur Hauptachse gleitet, eine Abweisvorrichtung (20) beinhaltet, die einen festen Teil der Gondel (2) mit diesem Steuerungssektor (12) verbindet, um sie bei der Rückwärtsbewegung der beweglichen Abdeckung (8) in eine Umkehrstellung gleiten zu lassen, und Klappenschaltgestänge (16) beinhaltet, die diesen Steuerungssektor (12) mit den schwenkbaren Klappen (10) verbinden, die gegenüber der beweglichen Abdeckung (8) angeordnet sind, die diese Klappen (10) kippen und dabei den ringförmigen Triebwerksgang (18) beim Gleiten des Steuerungssektors (12) in seine Umkehrstellung schließen.

2. Gondel nach Anspruch 1, **dadurch gekennzeichnet, dass** jedes Klappenschaltgestänge (16) ein Spielausgleichssystem beinhaltet, das zwei zueinander gleitende axiale Teile umfasst, die mit einer Zwischenfeder (26) ausgestattet sind.

3. Gondel nach einem der vorstehenden Ansprüche, **dadurch gekennzeichnet, dass** jede Klappe (10) einen Sicherheitshaken (28) beinhaltet, der an dem Steuerungssektor (12) befestigt ist, der die Stellung durch Anlegen an der Klappe (10) in Direktstrahlstellung einer Kraft parallel zur Verschiebung dieser Klappe (10) sichert.

4. Gondel nach einem der vorstehenden Ansprüche, **dadurch gekennzeichnet, dass** jeder Steuerungssektor (12) Führungen (14) beinhaltet, die an der sie tragenden Abdeckung (8) befestigt sind, wodurch eine Bewegung dieses Steuerungssektors (12) entlang einer Umfangsrichtung ermöglicht wird.

5. Gondel nach einem der vorstehenden Ansprüche, **dadurch gekennzeichnet, dass** jeder Steuerungssektor (12) an jedem seiner Enden eine Abweisvorrichtung (20) beinhaltet.

6. Gondel nach einem der vorstehenden Ansprüche, **dadurch gekennzeichnet, dass** sie eine Abweisvorrichtung (20) beinhaltet, die eine Abweisplatte (32) umfasst, die durch einen Abdeckungsdrehzapfen (34) an der Abdeckung (8) befestigt ist, die durch ein Primärschaltgestänge (36) mit dem festen Teil der Gondel (2) verbunden ist und durch ein Sekundärschaltgestänge (38) mit dem Steuerungssektor (12) verbunden ist.

7. Gondel nach einem der Ansprüche 1 bis 5, **dadurch gekennzeichnet, dass** sie eine Abweisvorrichtung (20) beinhaltet, die eine Zahnstange (40) umfasst, die mit dem festen Teil (2) verbunden ist und parallel zur Hauptachse angeordnet ist, und ein Ritzel (42), welches in diese Gewindestange (40) eingreift, das mit einer Abdeckung (8) verbunden ist.

8. Gondel nach Anspruch 7, **dadurch gekennzeichnet, dass** die Abweisvorrichtung (20) ein Sekundärschaltgestänge (38) beinhaltet, welches das Ritzel (42) mit dem Steuerungssektor (12) verbindet, oder in einer Variante dadurch, dass das Ritzel (42) einen Nocken (50) antreibt, der einen Verbindungszapfen (52) aufnimmt, der mit dem Steuerungssektor (12) verbunden ist, oder ein Ritzel eines Winkeltriebs (70) antreibt, der durch ein System bestehend aus Schraube und Mutter mit dem Steuerungssektor (12) verbunden ist.

9. Gondel nach einem der Ansprüche 1 bis 5, **dadurch gekennzeichnet, dass** sie eine Abweisvorrichtung (20) beinhaltet, die einen Nocken (50, 90) umfasst, der einen Verbindungszapfen (52) aufnimmt, wobei eines dieser Elemente bei der Rückwärtsbewegung der Abdeckung (8) axial gleitet, wobei das andere Element mit dem Steuerungssektor (12) verbunden ist, um ihn anzutreiben.

10. Gondel nach einem der Ansprüche 1 bis 5, **dadurch gekennzeichnet, dass** sie eine Abweisvorrichtung (20) beinhaltet, die ein Kabel (80) umfasst, das entlang einer Querrichtung an dem Steuerungssektor (12) befestigt ist, das auf jeder Seite dieses Steuerungssektors (12) durch eine mit der Abdeckung (8) verbundene Riemenscheibe (82) verläuft, und dabei eine axiale Richtung nach hinten auf einer Seite, und nach vorne auf der anderen Seite einschlägt, um danach an einem festen Teil (2) befestigt zu werden.

## Claims

1. A nacelle for an engine of the bypass turbojet engine type disposed along a main axis, comprising starting from a front side an annular flow path (18) for receiving fresh air from a fan, then a thrust reverser system provided with at least one cowl (8) movable axially between a direct jet front position, and a reverse jet rear position which tilts pivoting flaps (10) while closing the annular flow path (18) at least partially, and which opens lateral openings of this annular flow path upstream of the pivoting flaps (10), equipped with reverser cascades returning the cold air flow towards the outside forwards, **characterized in that** each movable cowl (8) includes a control sector (12) sliding in a transverse plane relative to the main axis, includes a transmission device (20) connecting a fixed portion of the nacelle (2) to this control sector (12) to make it slide towards a reversal position when the movable cowl (8) is recoiled, and includes flap tie-rods (16) connecting this control sector (12) to the pivoting flaps (10) disposed in front of the movable cowl (8), which tilt these flaps (10) while closing the annular flow path (18) when sliding the control sector (12) towards its reversal position.

2. The nacelle according to claim 1, **characterized in that** each flap tie-rod (16) includes a backlash take-up system comprising two axial portions sliding relative to each other, equipped with an intermediate spring (26).

3. The nacelle according to any one of the preceding claims, **characterized in that** each flap (10) includes a safety hook (28) fastened to the control sector (12), which secures the position by applying on the flap (10) in the direct jet position, a force parallel to the displacement of this flap (10).

4. The nacelle according to any one of the preceding claims, **characterized in that** each control sector (12) includes guides (14) fastened to the cowl supporting it (8), enabling a movement of this control sector (12) according to a circumferential direction.

5. The nacelle according to any one of the preceding claims, **characterized in that** each control sector (12) includes a transmission device (20) at each of its ends.

6. The nacelle according to any one of the preceding claims, **characterized in that** it includes a transmission device (20) comprising a transmission plate (32) fastened to the cowl (8) by a cowl pivot (34), which is linked to the fixed portion of the nacelle (2) by a primary tie-rod (36) and to the control sector (12) by a secondary tie-rod (38).

7. The nacelle according to any one of claims 1 to 5, **characterized in that** it includes a transmission device (20) comprising a rack (40) linked to the fixed portion (2) and disposed parallel to the main axis, and a pinion (42) engaged on this rack (40), linked to a cowl (8).

8. The nacelle according to claim 7, **characterized in that** the transmission device (20) includes a secondary tie-rod (38) linking the pinion (42) to the control sector (12), or alternatively **in that** the pinion (42) drives a cam (50) receiving a connecting pin (52) connected to the control sector (12), or drives a pinion of an angle transmission (70) linked to the control sector (12) by a screw-nut system.

9. The nacelle according to any one of claims 1 to 5, **characterized in that** it includes a transmission device (20) comprising a cam (50, 90) receiving a connecting pin (52), one of these elements axially sliding during the recoil movement of the cowl (8), the other element being linked to the control sector (12) to drive it.

10. The nacelle according to any one of claims 1 to 5, **characterized in that** it includes a transmission device (20) comprising a cable (80) fastened to the control sector (12) according to a transverse direction, passing on each side of this sector (12) by a pulley (82) linked to the cowl (8) while following an axial direction rearwards on one side and forwards on the other side, before being fastened to a fixed portion (2).
